Europäisches Patentamt

European Patent Office

Office européen des brevets

(19)

(11) **EP 1 162 832 A2**

(12) **EUROPEAN PATENT APPLICATION**

(43) Date of publication:
**12.12.2001 Bulletin 2001/50**

(51) Int Cl.⁷: **H04N 5/253**

(21) Application number: **01201950.1**

(22) Date of filing: **25.05.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **06.06.2000 US 209645 P**
         **11.01.2001 US 758823**

(71) Applicant: **EASTMAN KODAK COMPANY**
**Rochester, New York 14650-2201 (US)**

(72) Inventors:
• **Yarid, Rockwell N.**
  **Rochester, New York 14650-2201 (US)**
• **Uhlig, Ronald E.**
  **Rochester, New York 14650-2201 (US)**

(74) Representative: **Parent, Yves et al**
**KODAK INDUSTRIE**
**Département Brevets - CRT**
**Zone Industrielle - B.P. 21**
**71102 Chalon sur Saône Cedex (FR)**

(54) **Method and apparatus for correcting non-uniformity in scanned digital images**

(57)    A method and apparatus for correcting non-uniformity in images created by a raster scan film recorder reduces non-uniformity-based image artifacts by novelly using two-dimensional correction: correction of input digital pixel data based upon the scan line position of the pixel, and the value (signal level) of the input pixel data. In the preferred embodiment, the line non-uniformity corrector is a bus-based digital circuit with a comprehensive look up table having corrections for each scan line pixel position, for all possible pixel intensity values. In alternate embodiments, memory requirements for the line non-uniformity correction table can be reduced by, for example, making non-uniformity corrections based upon groups of pixels, rather than upon single pixels, with the number of pixels in each group being inversely proportional to the memory requirement.

**FIG. 4**

EP 1 162 832 A2

**Description**

**FIELD OF THE INVENTION**

The present invention relates to raster scan recording of motion picture film in general, and to correcting system-introduced scan line non-uniformities in particular.

**BACKGROUND OF THE INVENTION**

As is well known, raster scan motion picture recording involves for each frame, exposing moving film to a focused, oscillating writing beam at discrete locations ("pixels") along a series of scan lines that are perpendicular to the direction of film travel. For color recording, three primary color (e.g., red, blue and green, or yellow, cyan and magenta) writing beams are converged at each pixel location, with the relative beam intensities, controlled by light modulators, determining the perceived color and density of the pixel on the recording medium.

Because small imperfections in the optical components of a raster scan film recorder can lead to the production of undesirable artifacts in the images, the manufacturing processes of raster scan film recorders require very small tolerances. Even with highly precise manufacturing processes, small imperfections may still exist. While some imperfections are introduced during the manufacturing process, such as defects to well-known polygon beam reflecting mirrors and defects to the writing beam focus lens, other imperfections may be introduced over time by environmental factors.

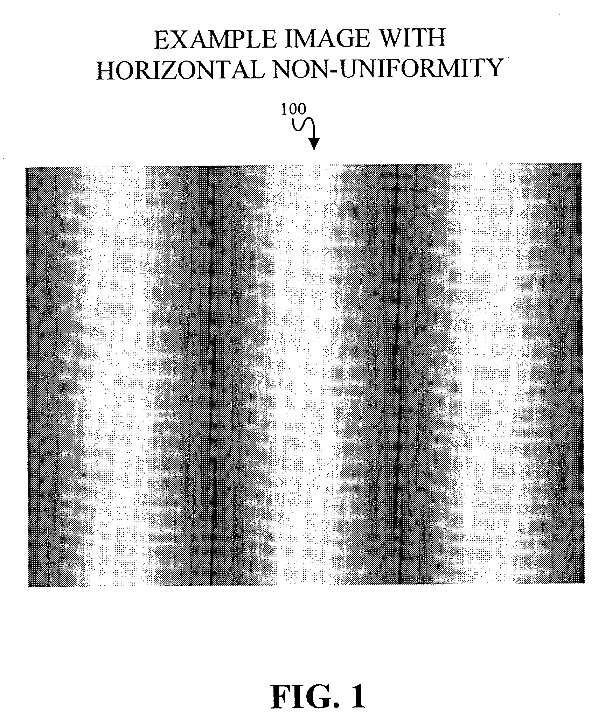

One type of artifact that can be caused by imperfections in a raster scan film recorder is horizontal non-uniformity. Figure 1 is an exaggerated example of an image having horizontal non-uniformity. Undulatory vertical stripe regions of noticeably different light intensities characterize horizontal non-uniformity. A raster scan film recorder having significant horizontal non-uniformity reproduces similar undesirable artifacts in all scan lines of the images produced.

Among the prior art approaches to correcting horizontal non-uniformity is that of U.S. Patent Number 4,751,523 issued to Froelich. The Froelich approach assumes that horizontal non-uniformity does not vary from scan line to scan line, and corrects the intensity of a pixel group by adding a correction factor or multiplying the intensity of a pixel group by a correction factor. However, a serious limitation of the Froelich approach and its ilk, is the fact that they do not take into account the affect on non-uniformity of variations in pixel intensity from scan line to scan line, and that therefore, noticeable artifacts may still exist.

Other approaches such as that of U.S. Patent Number 5,493,322 issued to Ng et al., address the problem of non-uniformity by controlling the on time, rather than the exposure level, of the writing beams. However, this approach is not convenient for raster scan film recorders which use polygon mirrors (or their equivalent) that rotate at a fixed speed.

In view of the above, there is an unmet need to provide a raster scan film recorder with non-uniformity correction, that takes into account pixel intensity variation from scan line to scan line, especially where the pixel data representation is not proportional to the light intensity (or the logarithm of light intensity).

**SUMMARY OF THE INVENTION**

To address the unmet needs of the prior art identified *supra,* the present invention provides, in raster scan film recording, a method of correcting system-generated image non-uniformities. The method at least includes the steps of: establishing at least one correction axis for correcting non-uniformity in pixels substantially aligned with the correction axis; correcting endemic non-uniformity of pixel regions along the correction axis, the pixel regions at least including one image pixel, based upon the position of the pixel regions along the correction axis; and correcting endemic non-uniformity of the pixel regions along the correction axis, based upon the intensity of the pixel regions.

The present invention also provides an apparatus for correcting system-generated image non-uniformities in raster scan film recording. The apparatus at least includes a position-based non-uniformity corrector adapted to correct endemic non-uniformity of pixel regions along at least one established correction axis, the pixel regions at least including one image pixel, based upon the position of the pixel regions along the correction axis. The apparatus also at least includes an intensity-based non-uniformity corrector adapted to correct endemic non-uniformity of the pixel regions along the correction axis, based upon the intensity of the pixel regions.

**BRIEF DESCRIPTION OF THE DRAWINGS**

Features and advantages of the present invention will become apparent to those skilled in the art from the description below, with reference to the following drawing figures, in which:

Figure 1 is an example of a raster-scanned film image with horizontal non-uniformity;

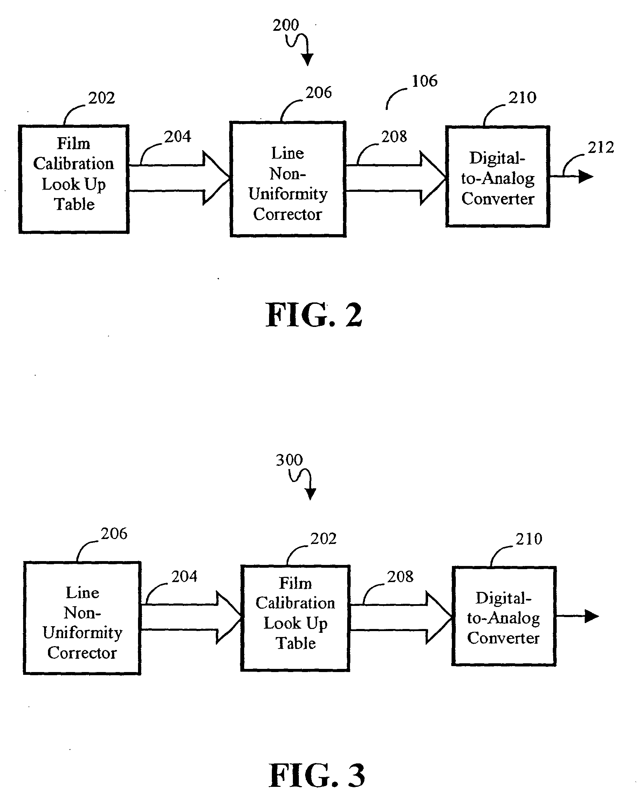

Figure 2 is a general schematic block diagram of the present-inventive apparatus implementing line non-uniformity correction in a raster scan film recorder, with line non-uniformity correction occurring after film calibration;
A variation of Figure 2, Figure 3 is a general schematic block diagram of the present-inventive apparatus implementing line non-uniformity correction in a raster scan film recorder, with line non-uniformity correction occurring before film calibration;

Figure 4 is a schematic block diagram of the present-inventive line non-uniformity corrector; and Figure 5 is a sample representation of a look up table containing line non-uniformity correction data for a single color.

## DETAILED DESCRIPTION OF THE INVENTION

The present-inventive non-uniformity correction method and apparatus for the correction of horizontal line non-uniformity and the like, novelly provides for non-uniformity-corrected pixel data, taking into account both the position of the pixel on the scan line, and the intensity data of the incoming pixel. This results in an image code that is not only corrected for the horizontal position along the scan lines, but also for the signal level of each pixel or pixel group. In the preferred embodiment, the present invention is implemented via one of the film calibration and line non-uniformity correction circuits 200 or 300.

In the system 200, a film calibration table 202 under direction of system control (not shown) is responsible for transforming data from incoming pixels to a form compatible with the light modulators (also not shown). The film-calibrated data is then corrected for line non-uniformity by a line non-uniformity corrector 206. A digital-to-analog converter 210 then converts the corrected pixel data, before outputting (at 212) it to the light modulators.

The system 300 performs the same function as the system 200, but with the line non-uniformity correction occurring before film calibration. Whether the system 200 or the 300 is used to correct line non-uniformities according to the present invention, is a matter of design choice.

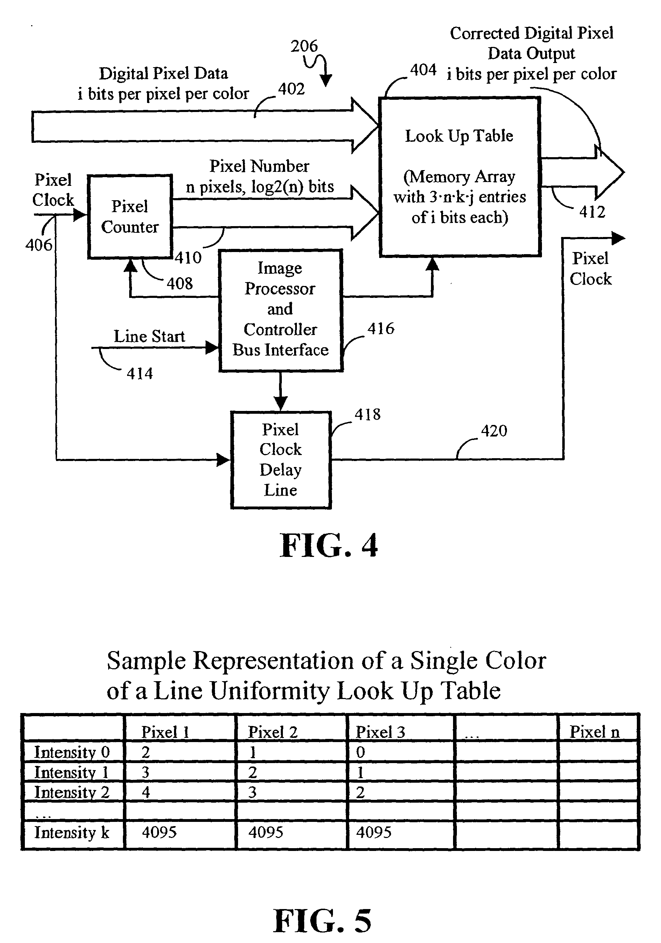

Figure 4 shows a schematic block diagram of the present-inventive line non-uniformity corrector 206. In operation, digital pixel data received via a digital pixel data bus 402 is applied to a look up table 404. The output of the look up table 404 via a corrected digital pixel data output bus 412 is presented to the digital-to-analog converter 210 for later presentation to the light modulators.

To locate the proper address of the appropriate corrected data in the look up table 404, the pixel number in the scan line output by a pixel counter 408 via a pixel number bus is combined with the data value from the digital pixel data bus 402. A reference pixel clock signal introduced via line 406 synchronizes the operation of the line non-uniformity corrector 206. An image processor and controller bus interface 416 controls the overall operation of the corrector.

At the beginning of a scan line, triggered by a line start signal at input 414, the image processor and controller bus interface 416 resets the pixel counter 408 to begin counting the pixel positions along a scan line. The pixel counter is incremented each time a pixel clock signal is received. The image processor and controller bus interface 416 also triggers the look up table 404 to read out the appropriate corrected digital pixel data for each pixel location.

As the pixel clock signal also synchronizes other operations of the raster scan film recording process, it is output via line 420 from the line non-uniformity corrector. A pixel clock delay line 418 introduces a delay to compensate for the latency associated with acquiring data from the look up table 404, so that the corrected digital pixel data is output simultaneously with the pixel clock signal.

Figure 5 details a sample line non-uniformity look up table for correcting the pixel data of one writing beam color. In practice the look up table 404 contains either three look up tables such as the example in Figure 5, or a large combined look up table with the values for three colors. From Figure 5, and in accordance with the present invention, there is a pixel data entry for every horizontal pixel position, and for every pixel intensity level possible. Thus, the number of table entries needed for complete pixel data correction according to the preferred embodiment of the present invention is given by the following equation.

$$\text{Equation 1} \qquad D = C \cdot N \cdot K$$

where D is the number of look up table entries, C is the number of primary colors (typically equal to 3 for red, blue and green), and K is the number of intensity levels possible for each pixel. For example, if there are $2^{12}$ pixel intensity levels possible, and 4096 pixels in each scan line, then there are 3 x 4096 x 4096, or 50, 331,648 entries needed for a comprehensive line non-uniformity look up table. If there are 12 bits stored in each table entry, then there are 603,979,776 bits stored in a comprehensive line non-uniformity look up table.

To reduce the number of entries required by a line non-uniformity look up table according to the present invention, corrected pixel data can be stored not for each pixel, but rather for each predefined group of pixels. The group can be chosen based upon the assumption that line non-uniformities do not drastically change from pixel to pixel. For example, if the pixel group contains 8 pixels, then only 6,291,456 entries are required for a comprehensive line non-uniformity look up table—a reduction of more than 44 million entries.

Variations and modifications of the present invention are possible, given the above description. However, all variations and modifications which are obvious to those skilled in the art to which the present invention pertains are considered to be within the scope of the protection granted by this Letters Patent.

For example, the present invention is not limited to correction of non-uniformities along the scan lines, but may also be used to correct vertical non-uniformities. In such an application, rather than a look up table with an entry for every pixel along a scan line, there is an entry for every scan line. The present invention can also be used to correct both horizontal and vertical non-uniformities by storing an entry for every pixel in the entire image, or at least an entry for every grouping of pixels throughout the entire image.

Also, the look up table and line non-uniformity corrector of the present invention can be implemented and numerous ways, using any combination of the following: software, hardware (including stand-alone systems, as well as networked systems), and firmware.

**Claims**

1. In raster scan film recording, a method of correcting system-generated image non-uniformities, said method comprising the steps of:

   establishing at least one correction axis for correcting non-uniformity in pixels substantially aligned with said correction axis;
   correcting endemic non-uniformity of pixel regions along said correction axis, said pixel regions at least comprising one image pixel, based upon the position of said pixel regions along said correction axis; and
   correcting endemic non-uniformity of said pixel regions along said correction axis, based upon the intensity of said pixel regions.

2. The method in Claim 1, wherein said correction axis is aligned with each new raster scan line.

3. The method in Claim 1, wherein said correction axes are perpendicular to raster scan lines, and there is a correction axis for each pixel region along said raster scan lines.

4. The method in Claim 1, further comprising the step of carrying out said correction steps via applying data from a look up table.

5. The method in Claim 1, wherein each pixel region contains only one pixel.

6. An apparatus for correcting system-generated image non-uniformities in raster scan film recording, said apparatus comprising:

   a position-based non-uniformity corrector adapted to correct endemic non-uniformity of pixel regions along at least one established correction axis, said pixel regions at least comprising one image pixel, based upon the position of said pixel regions along said correction axis; and
   an intensity-based non-uniformity corrector adapted to correct endemic non-uniformity of said pixel regions along said correction axis, based upon the intensity of said pixel regions.

7. The apparatus in Claim 6, wherein said correction axis is aligned with each new raster scan line.

8. The apparatus in Claim 6, wherein said correction axes are perpendicular to raster scan lines, and there is a correction axis for each pixel region along said raster scan lines.

9. The apparatus in Claim 6, further comprising a look up table, said look up table supplying correction data utilized by both said non-uniformity correctors.

10. The apparatus in Claim 6, wherein each pixel region contains only one pixel.

EXAMPLE IMAGE WITH
HORIZONTAL NON-UNIFORMITY

100

FIG. 1

200

| 202 | | 206 | 106 | | 210 | |
|---|---|---|---|---|---|---|
| Film Calibration Look Up Table | → 204 → | Line Non-Uniformity Corrector | → 208 → | Digital-to-Analog Converter | → 212 → | |

# FIG. 2

300

| 206 | | 202 | | 210 |
|---|---|---|---|---|
| Line Non-Uniformity Corrector | → 204 → | Film Calibration Look Up Table | → 208 → | Digital-to-Analog Converter → |

# FIG. 3

206

Digital Pixel Data
i bits per pixel per color
402

Corrected Digital Pixel
Data Output
404  i bits per pixel per color

Pixel
Clock
406

Pixel
Counter
410
408

Pixel Number
n pixels, log2(n) bits

Look Up Table

(Memory Array
with 3·n·k·j entries
of i bits each)

412

Pixel
Clock

Image
Processor
and
Controller
Bus Interface
416

Line Start
414

Pixel
Clock
Delay
Line
418

420

## FIG. 4

## Sample Representation of a Single Color
## of a Line Uniformity Look Up Table

|  | Pixel 1 | Pixel 2 | Pixel 3 | ... | Pixel n |
|---|---|---|---|---|---|
| Intensity 0 | 2 | 1 | 0 |  |  |
| Intensity 1 | 3 | 2 | 1 |  |  |
| Intensity 2 | 4 | 3 | 2 |  |  |
| ... |  |  |  |  |  |
| Intensity k | 4095 | 4095 | 4095 |  |  |

## FIG. 5